# FASCICULE DE BREVET EUROPEEN

(11) **EP 2 545 828 B1**
(45) Date de publication et mention de la délivrance du brevet: **06.08.2014**
(21) Numéro de dépôt: 12175175.4
(22) Date de dépôt: 05.07.2012
(51) Int. Cl.: A47J 43/044, A47J 43/07

(54) **Grille de dispositif presse-purée et appareil électroménager de préparation culinaire comportant une telle grille**
Gitter für Kartoffelpresse und Haushaltsgerät mit solch einem Gitter
Grid of potato ricer and domestic appliance with such a grid

(30) Priorité: 13.07.2011 FR 1156401
(43) Date de publication de la demande: 16.01.2013
(73) Titulaire: SEB S.A., 69130 Ecully (FR)
(72) Inventeur: Hamelin, Franck, 50490 Saint-Sauveur-Lendelin (FR)
(74) Mandataire: Bourrières, Patrice

(56) Documents cités:
- FR-A- 1 437 573

## Description

La présente invention concerne le domaine technique général des appareils électroménagers pour la réalisation de purées et se rapporte plus particulièrement à une grille de dispositif presse-purée.

Il est connu, du brevet FR 1 437 573, un dispositif presse-purée pouvant être accouplé à un boîtier moteur destiné à être tenu à la main, le dispositif presse-purée comprenant une palette, entraînée en rotation par le boîtier moteur, qui vient à proximité immédiate d'une grille perforée afin de réaliser de la purée en forçant les aliments à passer au travers des trous de la grille.

Un tel dispositif presse-purée présente l'avantage de se présenter sous la forme d'un accessoire pouvant être accouplé à un boîtier moteur d'appareil de type mixeur plongeant, à la place du pied de mixage, afin d'offrir une fonction supplémentaire à l'appareil et permettre à l'utilisateur de réaliser des purées de légumes sans effort. En particulier, un tel dispositif presse-purée est particulièrement efficace pour réaliser des purées de pommes de terre, de type purée mousseline, très fines et sans morceaux.

Cependant, un tel accessoire presse-purée présente l'inconvénient de pouvoir conduire à la réalisation d'une purée collante.

L'invention qui suit vise à pallier ces inconvénients en proposant un appareil électroménager de préparation culinaire comportant un boîtier moteur destiné à être tenu à la main et un outil presse-purée qui permet la réalisation de purées avec différents types de textures, tout en étant simple et économique à réaliser.

Le but de l'invention est atteint par une grille de dispositif presse-purée comportant une zone de traitement munie de trous balayée par une palette entraînée en rotation autour d'un axe, la grille comportant un orifice pour le passage d'un arbre d'entraînement de la palette, **caractérisée en ce que** les trous sont répartis sur la grille de telle sorte que chaque point de la palette passant sur la zone de traitement se trouve au moins une fois en regard d'un trou de la grille lorsque la palette effectue un tour.

Une telle caractéristique permet de minimiser le risque d'obtention d'une purée de pommes de terre collante. En effet, la demanderesse s'est rendu compte que la texture collante de la purée était générée par le cisaillement répété de la pomme de terre par la palette avant qu'elle ne pénètre dans un trou de la grille. La grille selon l'invention permet de résoudre cet inconvénient en minimisant le temps que met l'aliment pour traverser la grille, contrairement aux grilles de l'art antérieur pour lesquelles les trous sont alignés selon des cercles de sorte que des morceaux de pommes de terre sont régulièrement entraînés en rotation sur plusieurs tours par la palette sans rencontrer un trou de la grille.

Selon une autre caractéristique de l'invention, la grille présente une forme tronconique et les trous de la grille sont répartis en spirale hélicoïdale par rapport au centre de la grille.

Une telle répartition présente l'avantage de permettre l'obtention d'une grille particulièrement efficace.

Selon une autre caractéristique de l'invention, les trous de la grille sont répartis selon plusieurs spirales hélicoïdales imbriquées les unes dans les autres en étant décalées angulairement les unes par rapport aux autres.

Selon une autre caractéristique de l'invention, tous les trous de la zone de traitement de la grille présentent la même taille.

Une telle caractéristique présente l'avantage de permettre l'obtention d'une purée à texture homogène.

Selon une autre caractéristique de l'invention, les trous de la grille sont circulaires.

Selon encore une autre caractéristique de l'invention, les trous circulaires présentent un diamètre inférieur à 3 mm et de préférence de l'ordre de 2,5 mm.

Une telle caractéristique permet l'obtention d'une purée mousseline fine, sans morceaux.

L'invention concerne également un appareil électroménager de préparation culinaire comportant un dispositif presse-purée accouplé à un boîtier moteur destiné à être tenu à la main, le dispositif presse-purée comprenant une palette entraînée en rotation autour d'un axe par le boîtier moteur et une grille comportant une zone de traitement munie de trous balayée par la palette, **caractérisé en ce que** la grille est telle que précédemment décrite.

Selon encore une autre caractéristique de l'invention, le dispositif presse-purée comprend un fût comportant une extrémité supérieure comprenant une pièce d'accouplement assurant le montage amovible du dispositif presse-purée sur le boîtier moteur, le fût renfermant un arbre entraîné en rotation par le boîtier moteur et comprenant une extrémité inférieure supportant la grille, l'arbre comportant une extrémité débouchant au centre de la grille sur laquelle la palette est fixée.

Selon encore une autre caractéristique de l'invention, le dispositif presse-purée est un accessoire accouplé de manière amovible au boîtier moteur.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective éclatée d'un appareil électroménager de type mixeur comprenant un dispositif presse-purée muni d'une grille selon un mode particulier de réalisation de l'invention ;
- la figure 2 est une vue en coupe longitudinale du dispositif presse-purée de la figure 1 ;
- la figure 3 est une vue de dessus de la grille équipant le dispositif presse-purée des figures 1 et 2 ;
- la figure 4 est une vue éclatée, de côté, du système de fixation de la palette et de la grille ;
- la figure 5 est une vue en perspective de l'appareil électroménager de la figure 1 lorsque le dispositif presse-purée est complètement assemblé.

Seuls les éléments nécessaires à la compréhension de l'invention ont été représentés. Pour faciliter la lecture des dessins, les mêmes éléments portent les mêmes références d'une figure à l'autre.

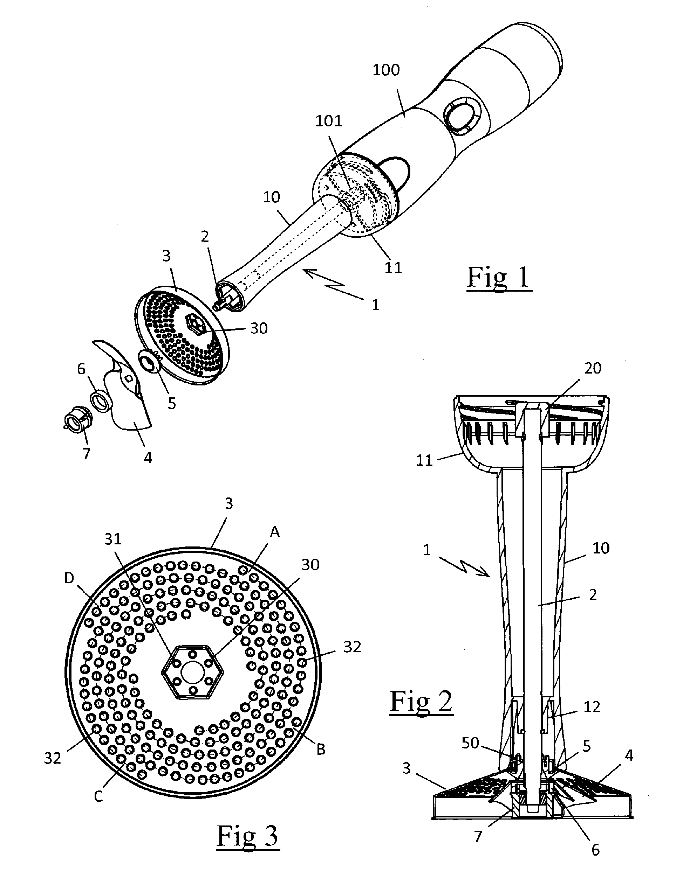

La figure 1 représente un dispositif presse-purée 1 accouplé à un boîtier moteur 100 de mixeur ménager refermant, de manière connue en soi, un moteur possédant un arbre de sortie muni d'un entraîneur rotatif 101, représenté en pointillé sur cette figure, traversant une ouverture pratiquée dans la partie inférieure du boîtier moteur 100. Un tel boîtier moteur 100 est bien connu de l'art antérieur et est décrit plus en détails dans la demande de brevet FR 2 861 568 déposée par la demanderesse.

Dans l'exemple de réalisation illustré, le dispositif presse-purée est constitué par un accessoire 1 monté de manière amovible sur le boîtier moteur 100, cet accessoire 1 comportant un fût tubulaire 10 comprenant une partie supérieure munie d'une pièce d'accouplement 11 assurant son montage sur le boîtier moteur 100.

Le fût tubulaire 10 est avantageusement réalisé en acier inox ou en matière plastique et renferme un arbre d'entraînement 2 guidé par un palier 12 (visible sur la figure 2) disposé à proximité de l'extrémité inférieure de l'arbre d'entraînement 2, l'extrémité supérieure de l'arbre d'entraînement 2 étant munie d'un embout 20 venant s'accoupler avec l'entraîneur rotatif 101 du boîtier moteur 100 lorsque l'accessoire presse-purée 1 est accouplé au boîtier moteur 100.

L'extrémité inférieure de l'accessoire presse-purée 1 reçoit un outil presse-purée comportant une grille 3 avantageusement tronconique comprenant une série de trous 32 circulaires répartis sur une zone de traitement de la grille 3 balayée par une palette 4 entraînée en rotation par le boîtier moteur 100, cette zone de traitement correspondant à une bande s'étendant radialement depuis la périphérie du corps tronconique de la grille 3 et sur les deux tiers de son rayon.

Plus particulièrement selon l'invention, les trous 32 sont répartis sur la grille 3 de telle sorte que chaque point de la palette 4 passant sur la zone de traitement se trouve au moins une fois en regard d'un trou 32 de la grille 3 lorsque la palette 4 effectue un tour.

Conformément à la figure 3, les trous 32 sont préférentiellement répartis selon quatre spirales hélicoïdales A, B, C, D, représentées en traits mixtes sur cette figure, imbriquées les unes dans les autres et décalées angulairement de 90° les unes des autres. Une telle répartition des trous 32 circulaires présente l'avantage de créer un décalage radial entre les trous 32 successivement balayés par la palette 4 lors de sa rotation de sorte que chaque point de la palette 4, passant sur la zone de traitement, se trouve plusieurs fois en regard d'un trou 32 de la grille lorsque la palette 4 effectue un tour.

Ces trous 32 circulaires présentent avantageusement un diamètre inférieur à 3 mm, et de préférence de l'ordre de 2,5 mm, de manière à permettre la réalisation d'un purée mousseline fine, sans morceaux.

Conformément à la figure 3, qui représente l'outil presse-purée isolément, la grille 3 est fixée axialement à l'extrémité du fût 10 en étant prise en sandwich entre le fût 10 et une pièce entretoise 5 venant se placer sous la grille 3, la grille 3 comportant une partie hexagonale 30 faisant saillie en son sommet et venant s'insérer dans une forme hexagonale complémentaire de l'extrémité inférieure du fût tubulaire 10 afin de brider la grille 3 en rotation sur le fût 10. La pièce entretoise 5 comporte des doigts 50 venant s'insérer dans des orifices 31 correspondants (visibles sur la figure 3) ménagés dans la partie hexagonale 30 de la grille 3 pour bloquer la pièce entretoise 5 en rotation sur la grille 3, les doigts 50 comportant avantageusement une extrémité évasée de sorte que la pièce entretoise 5 est rendue solidaire de la grille 3 lorsque les doigts 50 sont introduits dans les orifices 31.

De manière préférentielle, la grille 3 est obtenue par emboutissage d'une tôle d'inox d'une épaisseur de l'ordre de 0,7 mm et la partie hexagonale 30 est obtenue directement lors de l'emboutissage de la grille 3.

La palette 4 est maintenue en appui contre la pièce entretoise 5 au moyen d'un écrou de serrage 7 venant se visser sur l'extrémité inférieure filetée de l'arbre d'entraînement 2, un joint 6 en matériau souple, de type caoutchouc nitrile (NBR), étant interposé entre la palette 4 et l'écrou de serrage 7 afin d'autoriser un léger déplacement axial de la palette 4 en direction de l'écrou de serrage 7 lorsque la palette rencontre des aliments durs.

La pièce entretoise 5 présente avantageusement une partie tronconique 51 munie d'une extrémité annulaire sur laquelle la palette 4 vient reposer, la pièce entretoise 5 étant dimensionnée de telle sorte qu'il résulte un léger jeu, de l'ordre de 1 mm, entre la palette 4 et la grille 3, et étant préférentiellement moulée dans matériau thermoplastique de type polyacétal (POM), ce matériau présentant l'avantage de posséder de bonnes propriétés de glissement et une bonne résistance à l'usure.

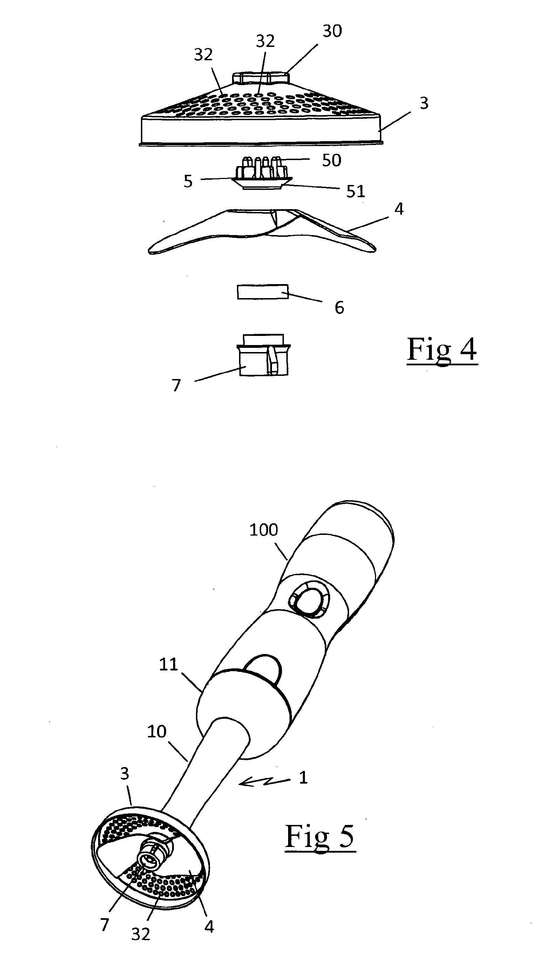

Une telle grille 3 perforée, lorsqu'elle est assemblée à l'accessoire presse-purée 1 et au boîtier moteur 100, ainsi que cela est illustré sur la figure 5, permet la réalisation de purée mousseline avec une grande facilité, l'utilisateur n'ayant qu'à amener la palette 4 entraînée en rotation par le boîtier moteur 100 au contact des aliments cuits, tels que des pommes de terre, pour que la palette 4 attrape ces aliments et force leur passage au travers des trous 32 de la grille 3.

En particulier, l'usage d'une telle grille 3 avec des trous 32 répartis en spirales hélicoïdales permet d'éviter que des morceaux de pommes de terre se trouvent entraînés en rotation dans une zone de la grille 3 démunie de trous 32 et se trouvent alors cisaillés et échauffés de manière excessive. Une telle grille 3 présente donc l'avantage de permettre la réalisation de purée mousseline peu collante en limitant le temps de passage de la pomme de terre entre la grille 3 perforée et la palette 4.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, la grille du dispositif presse-purée pourra comporter des trous de plus grande taille afin de réaliser de la purée plus grossière, avec des morceaux.

Dans une autre variante de réalisation de l'invention, les trous de la grille pourront être non circulaires.

Dans une autre variante de réalisation de l'invention, l'accessoire presse-purée pourra être solidaire du boîtier moteur de manière non démontable.

## Revendications

1. Grille (3) de dispositif presse-purée (1) comportant une zone de traitement munie de trous (32) balayée par une palette (4) entraînée en rotation autour d'un axe, ladite grille comportant un orifice pour le passage d'un arbre d'entraînement (2) de la palette (4), **caractérisée en ce que** les trous (32) sont répartis sur la grille (3) de telle sorte que chaque point de la palette (4) passant sur la zone de traitement se trouve au moins une fois en regard d'un trou (32) de la grille (3) lorsque la palette (4) effectue un tour.

2. Grille (3) de dispositif presse-purée (1) selon la revendication 1, **caractérisée en ce que** la grille (3) présente une forme tronconique et **en ce que** les trous (32) de la grille (3) sont répartis en spirale hélicoïdale par rapport au centre de la grille (3).

3. Grille (3) de dispositif presse-purée (1) selon la revendication 2, **caractérisée en ce que** les trous de la grille (3) sont répartis selon plusieurs spirales hélicoïdales imbriquées les unes dans les autres, lesdites spirales étant décalées angulairement les unes par rapport aux autres.

4. Grille (3) de dispositif presse-purée (1) selon l'une quelconque des revendications 1 à 3, **caractérisée en ce que** tous les trous (32) de la zone de traitement de la grille (3) présentent la même taille.

5. Grille (3) de dispositif presse-purée (1) selon l'une quelconque des revendications 1 à 4, **caractérisée en ce que** les trous (32) de la grille (3) sont circulaires.

6. Grille (3) de dispositif presse-purée (1) selon la revendication 5, **caractérisée en ce que** les trous (32) circulaires présentent un diamètre inférieur à 3 mm et de préférence de l'ordre de 2,5 mm.

7. Appareil électroménager de préparation culinaire comportant un dispositif presse-purée (1) accouplé à un boîtier moteur (100) destiné à être tenu à la main, ledit dispositif presse-purée (1) comprenant une palette (4) entraînée en rotation autour d'un axe par ledit boîtier moteur (100) et une grille (3) comportant une zone de traitement munie de trous (32) balayée par la palette (4), **caractérisé en ce que** la grille (3) est conforme à l'une des revendications 1 à 6.

8. Appareil électroménager selon la revendication 7, **caractérisé en ce que** le dispositif presse-purée (1) comprend un fût (10) comportant une extrémité supérieure comprenant une pièce d'accouplement (11) assurant le montage amovible du dispositif presse-purée (1) sur le boîtier moteur (100), ledit fût (10) renfermant un arbre (2) entraîné en rotation par le boîtier moteur (100) et comprenant une extrémité inférieure supportant la grille (3), ledit arbre (2) comportant une extrémité débouchant au centre de la grille (3) sur laquelle la palette (4) est fixée.

9. Appareil électroménager selon la revendication 8, **caractérisé en ce que** ledit dispositif presse-purée (1) est un accessoire accouplé de manière amovible au boîtier moteur (100).

## Patentansprüche

1. Lochscheibe (3) für eine Püriervorrichtung (1), umfassend einen Verarbeitungsbereich mit Löchern (32), der von einem Flügelmesser (4) durchstrichen wird, das sich um eine Achse dreht, wobei diese Lochscheibe eine Öffnung für den Durchgang einer Antriebswelle (2) des Flügelmessers (4) aufweist, **dadurch gekennzeichnet, dass** die Löcher (32) so auf der Lochscheibe (3) verteilt sind, dass sich jeder Punkt des Flügelmessers (4), das durch den Verarbeitungsbereich streicht, mindestens ein Mal gegenüber einem Loch (32) der Lochscheibe (3) befindet, wenn das Flügelmesser (4) eine Umdrehung vollzieht.

2. Lochscheibe (3) für eine Püriervorrichtung (1) nach Anspruch 1, **dadurch gekennzeichnet, dass** die Lochscheibe (3) kegelförmig ausgebildet ist und dass die Löcher (32) der Lochscheibe (3) zur Mitte der Lochscheibe (3) helikal angeordnet sind.

3. Lochscheibe (3) für eine Püriervorrichtung (1) nach Anspruch 2, **dadurch gekennzeichnet, dass** die Löcher der Lochscheibe (3) in mehreren zylindrischen Spiralen ineinandergreifend angeordnet sind, wobei diese Spiralen winkelmäßig zueinander versetzt sind.

4. Lochscheibe (3) für eine Püriervorrichtung (1) nach einem der Ansprüche 1 bis 3, **dadurch gekennzeichnet, dass** alle Löcher (32) des Verarbeitungsbereichs der Lochscheibe (3) dieselbe Größe aufweisen.

5. Lochscheibe (3) für eine Püriervorrichtung (1) nach einem der Ansprüche 1 bis 4, **dadurch gekennzeichnet, dass** alle Löcher (32) der Lochscheibe (3) rund sind.

6. Lochscheibe (3) für eine Püriervorrichtung (1) nach Anspruch 5, **dadurch gekennzeichnet, dass** die runden Löcher (32) einen Durchmesser von weniger als 3 mm und vorzugsweise 2,5 mm aufweisen.

7. Elektrohaushaltsgerät für kulinarische Zubereitungen, umfassend eine Püriervorrichtung (1), die an einem Motorgehäuse (100) montiert ist, dafür bestimmt, in der Hand gehalten zu werden, wobei diese Püriervorrichtung (1) ein Flügelmesser (4) umfasst, das sich um eine durch das besagte Motorgehäuse (100) angetriebene Achse dreht, und eine Lochscheibe (3) mit einem mit Löchern (32) versehenen Verarbeitungsbereich, der von dem Flügelmesser (4) durchstrichen wird, **dadurch gekennzeichnet, dass** die Lochscheibe (3) einem der Ansprüche 1 bis 6 entspricht.

8. Elektrohaushaltsgerät nach Anspruch 7, **dadurch gekennzeichnet, dass** die Püriervorrichtung (1) einen Schaft (10) mit einem Anschlussstück (11) am oberen Ende aufweist, durch das die Püriervorrichtung (1) abnehmbar am Motorgehäuse (100) montiert werden kann, wobei der besagte Schaft (10) eine Welle umschließt, die vom Motorgehäuse (100) in eine Drehbewegung versetzt wird, und an dessen unterem Ende die Lochscheibe (3) sitzt, wobei die Welle (2) ein Ende aufweist, das durch die Mitte der Lochscheibe (3) verläuft und an dem das Flügelmesser (4) befestigt ist.

9. Elektrohaushaltsgerät nach Anspruch 8, **dadurch gekennzeichnet, dass** die Püriervorrichtung (1) ein abnehmbar am Motorgehäuse (100) angebrachtes Zubehör ist.

## Claims

1. Grid (3) of potato masher (1) comprising a treatment zone provided with holes (32) swept by a blade (4) driven in rotation about an axis, said grid having an orifice for the passage of a drive shaft (2) for driving the blade (4), **characterised in that** the holes (32) are distributed on the grid (3) such that each point of the blade (4) passing over the treatment zone is at least once opposite a hole (32) of the grid (3) when the blade (4) makes a rotation.

2. Grid (3) of potato masher (1) according to claim 1, **characterised in that** the grid (3) has a frustoconical shape and **in that** the holes (32) of the grid (3) are distributed in a helical spiral relative to the centre of the grid (3).

3. Grid (3) of potato masher (1) according to claim 2, **characterised in that** the holes of the grid (3) are distributed in several helical spirals nested inside each other, said spirals being offset angularly with respect to each other.

4. Grid (3) of potato masher (1) according to one of claims 1 to 3, **characterised in that** all the holes (32) of the treatment zone of the grid (3) have the same size.

5. Grid (3) of potato masher (1) according to one of claims 1 to 4, **characterised in that** the holes (32) of the grid (3) are circular.

6. Grid (3) of potato masher (1) according to claim 5, **characterised in that** the circular holes (32) have a diameter of less than 3 mm and preferably about 2.5 mm.

7. Food preparation household electrical appliance comprising a potato masher (1) coupled to a motor housing (100) to be held in the hand, said potato masher (1) comprising a blade (4) driven in rotation about an axis by said motor housing (100) and a grid (3) comprising a treatment zone provided with holes (32) swept by the blade (4), **characterised in that** the grid (3) is conform with one of claims 1 to 6.

8. Household electrical appliance according to claim 7, **characterised in that** the potato masher (1) comprises a barrel (10) having an upper end comprising a coupling part (11) for removable mounting of the potato masher (1) on the motor housing (100), said barrel (10) having a shaft (2) driven in rotation by the motor housing (100) and having a lower end supporting the grid (3), said shaft (2) having an end opening at the centre of the grid (3) on which the blade (4) is fixed.

9. Household electrical appliance according to claim 8, **characterised in that** said potato masher (1) is an accessory coupled removably to the motor housing (100).
